# EUROPÄISCHE PATENTSCHRIFT

(11) **EP 3 521 729 B1**
(45) Veröffentlichungstag und Bekanntmachung des Hinweises auf die Patenterteilung: **11.03.2020**
(21) Anmeldenummer: 18155221.7
(22) Anmeldetag: 06.02.2018
(51) Int. Cl.: F24S 25/67, F24S 25/20, F24S 25/33, E04D 13/12, H02S 20/23, F24S 25/634, F24S 20/20, F24S 50/60, F24S 25/00, F24S 20/00, F24S 25/60

(54) **SYSTEM ZUR BILDUNG EINES TRAGRAHMENS FÜR MEHRERE PLATTENFÖRMIGE, IN EINER FLÄCHE ANGEORDNETE GEGENSTÄNDE**
SYSTEM FOR FORMING A SUPPORT FRAME FOR MULTIPLE PLATE-SHAPED OBJECTS ARRANGED IN A SPACE
SYSTÈME DE FORMATION D'UN CADRE SUPPORT POUR PLUSIEURS OBJETS EN FORME DE PLAQUE ET DISPOSÉS SUR UNE SURFACE

(43) Veröffentlichungstag der Anmeldung: 07.08.2019
(73) Patentinhaber: RES-PIT UG (haftungsbeschränkt), 87600 Kaufbeuren (DE)
(72) Erfinder: Cörlin, Thomas, 87600 Kaufbeuren (DE)
(74) Vertreter: Wiese, Gerhard

(56) Entgegenhaltungen:
- EP-A2- 0 905 795
- WO-A2-2004/079775
- DE-U1-202007 006 094
- FR-A1- 2 969 191

## Beschreibung

Die Erfindung betrifft ein System zur Bildung eines Tragrahmens für mehrere plattenförmige, in einer Fläche angeordnete Gegenstände gemäß dem Oberbegriff des Patentanspruchs 1.

Ein System zur Befestigung mehrerer plattenförmiger Gegenstände an einem Tragrahmen ist beispielsweise aus der DE 10 2011 104 461 A1 bekannt. Dabei handelt es sich um ein mittels eines Rahmensegments gerahmtes Photovoltaik-Modul, das mit einer Trägerwand eines Modulträgers verbunden ist, wobei sich das Rahmensegment mittels einer unteren Außenwand auf einer Oberseite der Trägerwand abstützt. Trägersegment und Trägerwand werden mittels eines klammerförmigen Haltekörpers kraftschlüssig miteinander verbunden.

Das Dokument WO 2004/079775 A1 offenbart ein System zur Bildung eines Tragrahmens gemäß dem Oberbegriff des Anspruchs 1.

Aufgabe der Erfindung ist es, ein einfach montierbares, modular aufgebautes System zur Bildung eines Tragrahmens für mehrere plattenförmige, in einer Fläche angeordnete Gegenstände zu schaffen.

Diese Aufgabe wird durch ein System mit den Merkmalen des Anspruchs 1 gelöst. Vorteilhafte Ausgestaltungen der Erfindung sind in den darauf bezogenen Unteransprüchen angegeben.

Mit der vorliegenden Erfindung ist ein Befestigen einer beliebig großen Anzahl plattenförmiger, in einer Ebene angeordneter Gegenstände an Trägerprofilen unter gleichzeitiger Bildung eines Tragrahmens möglich.

Als ein mögliches Einsatzgebiet der Erfindung seien beispielhaft Photovoltaik-Anlagen genannt, bei denen die plattenförmigen Gegenstände von Photovoltaik-Modulen gebildet werden.

Wenn in dieser Anmeldung die Begriffe "vertikal" oder "horizontal" verwendet werden, treffen diese Begriffe für ein beispielsweise auf einem flachen horizontalen Dach angeordnetes System zu. Bei einer Befestigung des Systems an einer vertikal Fassade ändern sich die Angaben entsprechend, das heißt, in dieser Gebrauchsposition wird "vertikal" zu "horizontal" und umgekehrt. Es versteht sich für den Fachmann, dass zwischen diesen beiden Positionen auch beliebige schräge Anordnungen des Systems möglich sind.

Das erfindungsgemäße System zur Befestigung mehrerer plattenförmiger Gegenstände an einem Tragrahmen weist Trägerprofile mit Formschlusselementen zum Verbinden mit benachbarten Trägerprofilen auf. Die plattenförmigen Gegenstände sind dabei jeweils an einem der Trägerprofile angeordnet. Jeweils zwei benachbarte Trägerprofile bilden gemeinsam mit einem diese Trägerprofile formschlüssig verbindenden Verbindungselement ein geschlossenes Profil. Die Formschlusselemente ermöglichen ein einfaches Einklinken eines neu hinzugefügten Trägerprofils in ein bereits montiertes Trägerprofil des Systems, wodurch bereits eine eindeutige Positionierung des neu hinzugefügten Trägerprofils erfolgt. Die anschließende Verbindung mittels des Verbindungselements ist dann in besonders einfacher Weise herstellbar. Durch die Verbindung mittels des Verbindungselements wird dann aus jeweils zwei benachbarten Trägerprofilen ein geschlossenes Hohlprofil geschaffen, das eine außerordentlich hohe Stabilität und Tragkraft besitzt.

Das Formschlusselement ist an einem im wesentlich horizontalen Steg des Trägerprofils, bevorzugt einstückig, mit diesem ausgebildet oder angeordnet.

Das Formschlusselement wird von einem nach unten geöffneten ersten klammerförmigen Steg an einem ersten Trägerprofil und von einem nach oben geöffneten zweiten klammerförmigen Steg an einem benachbarten zweiten Trägerprofil gebildet. Wenn auf jeder rechten Seite eines plattenförmigen Bauteils beispielsweise ein Trägerprofil mit einem nach unten geöffneten ersten klammerförmigen Steg und auf der linken Seite ein Trägerprofil mit einem nach oben geöffneten zweiten klammerförmigen Steg angeordnet ist, können die dem System hinzugefügten neuen plattenförmigen Bauteile durch Einklinken der Trägerprofile ineinander einfach formschlüssig miteinander in Eingriff gebracht werden.

Das Einklinken benachbarter Trägerprofile wird dadurch zusätzlich erleichtert, dass benachbart zu dem nach oben geöffneten zweiten klammerförmigen Steg am Trägerprofil eine Anschrägung vorgesehen ist, die ein Ankippen dieses Trägerprofils für ein Verbinden mit dem benachbarten Trägerprofil in derselben Ebene - das heißt, ohne das bereits liegende Trägerprofil mitbewegen zu müssen - ermöglicht.

Für einen formschlüssigen Eingriff wird eine Formschlussverbindung aus einem ersten nach unten geöffneten klammerförmigen Steg und einem zweiten nach oben geöffneten klammerförmigen Steg gebildet. Das Verbinden zweier benachbarter Trägerprofile erfolgt über ein Ankippen der Seite des Trägerprofils, an dem der nach oben geöffnete klammerförmige Steg ausgebildet ist. Für ein einfaches Ineinanderschieben ist an diesem der Stege eine Anschrägung ausgebildet. Diese ermöglicht das Verbinden der beiden Trägerprofile auf derselben Ebene.

Ausnahmen bilden die eine Begrenzung des Systems bildenden Trägerprofile, die als Endprofile eine glatte Außenfläche ohne weitere Formschlusselemente aufweisen.

In einer vorteilhaften Ausgestaltung greift das Verbindungselement, welches die jeweils zwei benachbarten Trägerprofile an deren Oberseiten miteinander verbindet, formschlüssig in einem Hinterschnitt ein, der an jedem Trägerprofil ausgebildet ist. Die Anordnung der Verbindungselemente an der Oberseite zweier benachbarter Trägerprofile erleichtert die Montage. Durch das oben angeordnete Verbindungselement und die unten ineinandergreifenden Formschlusselemente werden die benachbarten Trägerprofile dann zu einem stabilen geschlossenen Hohlprofil verbunden. In diesem Hohlprofil können beispielsweise auch Anschluss- oder Verbindungskabel geführt werden oder Steckverbindungen für die Verbindung benachbarter Photovoltaikmodule sehr gut geschützt untergebracht werden.

An jedem Trägerprofil sind Auflage-Elemente und Anschlag-Elemente ausgebildet. Dadurch sind die plattenförmigen Gegenstände an den den Tragrahmen bildenden Trägerprofilen eindeutig positionierbar.

Um die plattenförmigen Gegenstände zuverlässig in einer Ebene plan ausrichten zu können, entspricht der Abstand des Auflage-Elements am Trägerprofil zum oberen Rand des Trägerprofils möglichst exakt der Dicke des plattenförmigen Gegenstands. Gemäß einer vorteilhaften Weiterbildung ist parallel zu einem das Auflageelement bildenden horizontaler Steg ein weiterer Steg am Trägerprofil ausgebildet, der die Oberseite des plattenförmigen Gegenstands übergreift.

Vorzugsweise weisen die Trägerprofile nach unten abgebogene Stege auf und bilden mit einer vertikalen Wand des benachbarten Trägerprofils eine definierte Längsnut, deren Breite der Wandstärke eines vertikalen Steges des U-förmigen Verbindungselements entspricht. Die Längsnut nimmt in montiertem Zustand den vertikalen Steg des U-förmigen Verbindungselements formschlüssig auf. Das U-förmige erste Verbindungselement ist mittels einer kraftschlüssigen Verbindung mit einem als Platte ausgebildeten zweiten Verbindungselement verbindbar.

Die Verbindungselemente können in einer weiteren beispielhaften Ausführungsform als Träger für weiteres Zubehör dienen. Beispielsweise sind so begehbare Stufen und/oder Reinigungssysteme am System befestigbar.

Das System ist in unterschiedlichen Ausführungsbeispielen realisierbar. Vorzugsweise sind die plattenförmigen Gegenstände als Photovoltaik-Module ausgebildet. Es sind jedoch ebenso auch beispielsweise Stegglasplatten, Kunststoffplatten, Holzplatten- oder -bohlen oder sogar Betonplatten durch ein erfindungsgemäßes System zu einem Tragwerk oder Bauwerk verbindbar. Beispielsweise ist das System auf Dächern und/oder Fassaden anbringbar oder kann in einer Schwerlastvariante auch wenigstens teilweise eine Dachkonstruktion eines Hallendaches, Wintergartens oder Carports komplett ersetzen oder eine Decke zur Bildung einer Geschossfläche oder eines Zwischengeschosses eines Bauwerks, eines Balkons, eines Lagerregalsystems oder ähnlichem bilden.

Nachfolgend werden Ausführungsbeispiele der Vorrichtung unter Bezugnahme auf die Zeichnungen näher erläutert. Es zeigen:
- Fig. 1: eine perspektivische Ansicht eines Ausschnitts des Systems,
- Fig. 2: eine schematische Darstellung verbundener Trägerprofile mit einem Verbindungselement,
- Fig. 3: eine perspektivische Ansicht eines Trägerprofils, welches mit einem Endstück verbunden ist,
- Fig. 4: eine Sicht von unten auf einen plattenförmigen Gegenstand,
- Fig. 5: eine perspektivische Ansicht von vorne auf zwei verbundene Trägerprofile mit je einem plattenförmigen Gegenstand und einer stirnseitigen Abdeckung,
- Fig. 6: eine perspektivische Ansicht auf mehrere plattenförmigen Gegenstände mit einem Abschlussteil und einer Dichtung,
- Fig. 7A: einen Querschnitt des Verbindungsbereichs zweier einwandiger Trägerprofile,
- Fig. 7B: einen Querschnitt des Verbindungsbereichs zweier doppelwandiger Trägerprofile als Schwerlastvariante,
- Fig. 8: eine perspektivische Ansicht mit an den Verbindungselementen befestigtem, als Stufen ausgebildetem Zubehör,
- Fig. 9: eine perspektivische Ansicht auf eine Schwerlastvariante mit einem Rahmenquerteil,
- Fig. 10: eine perspektivische Ansicht auf eine stirnseitige Abdeckung zwischen den Trägerprofilen und
- Fig. 11: eine schematische Darstellung eines Trägerprofil-Deckels mit einer Halterung.

Die Erfindung betrifft ein System 10, das modular aufgebaut ist und mehrere Trägerprofile 20 bzw. 30 umfasst, die gemeinsam mit Verbindungselementen 40, 42 und Rahmenquerteilen 58 einen Tragrahmen 12 bilden. Der Tragrahmen 12 dient zum Lagern mehrerer in einer Ebene angeordneter plattenförmiger Gegenstände 14, die in den gezeigten Ausführungsbeispielen von Photovoltaik-Modulen 140 gebildet werden. Der Tragrahmen 12 dient auch optional zur Befestigung des gesamten Systems 10 an Trägern 100 eines Bauwerks. Das System 10 ist jedoch auch als frei tragendes System zur Lagerung einer Vielzahl plattenförmiger Gegenstände 14 geeignet, beispielsweise als Dach eines Gebäudes, Carports oder Wintergartens..

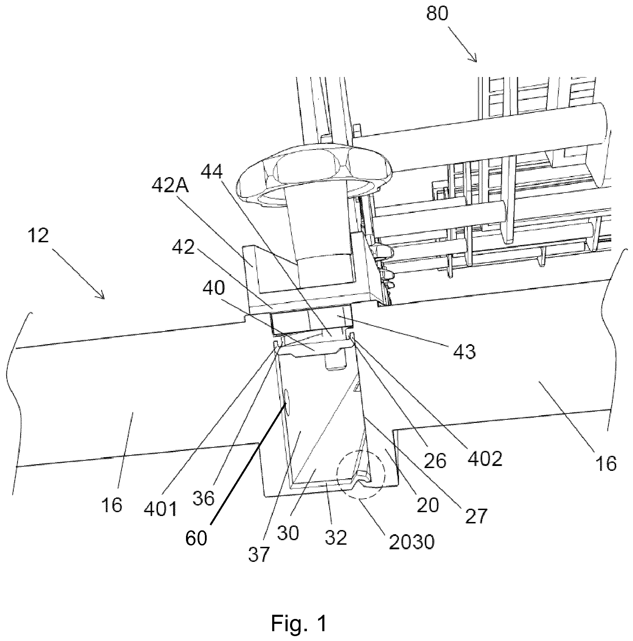

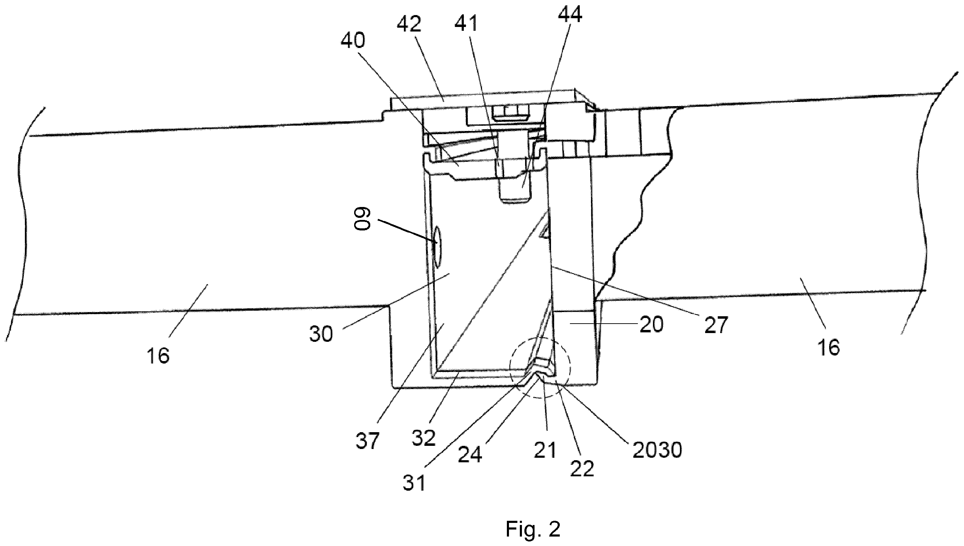

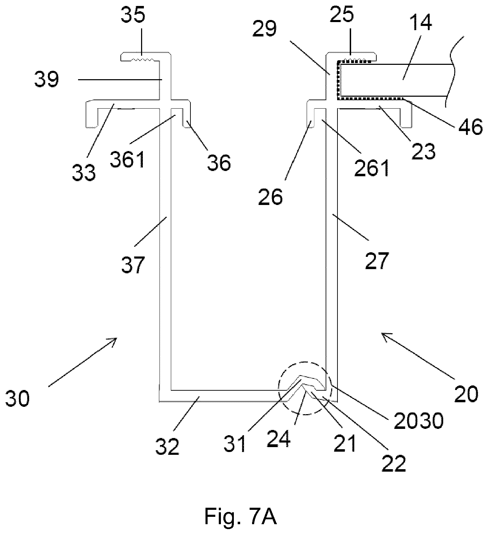

In einer schematischen Darstellung des Systems 10 in der Fig. 1 sind die Trägerprofile 20 bzw. 30 dargestellt, die nach vorne von einem Deckel 16 als Abschluss mit abgedeckt werden. An einem unteren horizontalen Steg 22 bzw. 32 der Trägerprofile 20 bzw. 30 sind ineinander greifende Formschlusselemente 21 bzw. 31 zur Bildung einer Formschlussverbindung 2030 ausgebildet. Die Formschlusselemente 21 bzw. 31 der Formschlussverbindung 2030 werden im gezeigten Ausführungsbeispiel durch einen nach unten geöffneten klammerförmigen Bereich 31 am unteren horizontalen Steg 32 des Trägerprofils 30 und einen nach oben geöffneten klammerförmigen Bereich 21 am unteren horizontalen Steg 22 des Trägerprofils 20 gebildet (siehe insbesondere Fig. 2 und 7A).

Für ein leichteres Zusammenfügen der beiden Formschlusselemente 21 und 31 weist der Steg 21 an seiner Unterseite eine Anschrägung 24 auf, mittels der das Trägerprofil 20 angekippt und dadurch das Formschlusselement 21 unter das Formschlusselement 31 eingefädelt werden kann. ohne dass das Formschlusselement 31 dazu bewegt werden muss. Dies erleichtert die Montage des gesamten Systems 10 erheblich, da dann im Beispiel gemäß Fig. 2 jeweils ein neues Modul, bestehen aus einem plattenförmigen Gegenstand 14 und einem auf dessen linker Seite angeordneten Trägerprofil 20 und einem auf dessen rechter Seite angeordneten Trägerprofil 30 einfach rechts neben bereits montierten anderen Modulen angedockt werden kann.

Eine weitere Verbindung der Trägerprofile 20, 30 erfolgt an der der Formschlussverbindung 2030 gegenüberliegenden oberen Seite der Trägerprofile 20, 30 über ein horizontal angeordnetes, U-förmiges Verbindungselement 40, dessen rechtes und linkes Ende als vertikal nach oben stehende Stege 401 bzw. 402 ausgebildet sind. Die Stege 401, 402 greifen von unten in eine Längsnut 261 bzw. 361, die durch nach unten abgewinkelte vertikale Stege 26; 36 an der Innenseite vertikaler Wände 27 bzw. 37 der Trägerprofile 20 bzw. 30 und den oberen Teil dieser Wände 27 bzw. 37 gebildet sind. Im Verbindungselement 40 ist mindestens ein Gewinde 41 für wenigstens eine Schraube 44 vorgesehen.

Auf den oberen horizontalen Auflageflächen der vertikalen Stege 26; 36 liegt eine Platte 42 auf, die ein weiteres Verbindungselement 42 bildet. Die Platte 42 ist, wie in den Figuren 1 und 2 dargestellt, durch Schrauben 44 mit dem U-förmigen Verbindungselement 40 verbunden, die somit kraft- und formschlüssig die Stege 126 bzw. 136 umgreifen. Die Platte 42 und das Verbindungselement 40 sind dadurch fest mit den beiden benachbarten Trägerprofile 20 und 30 verbunden. Die Trägerprofil 20, 30 bilden in Verbindung mit den Verbindungselementen 40 und 42 somit nach dem Festziehen der Schrauben 44 ein stabiles geschlossenes Hohlprofil.

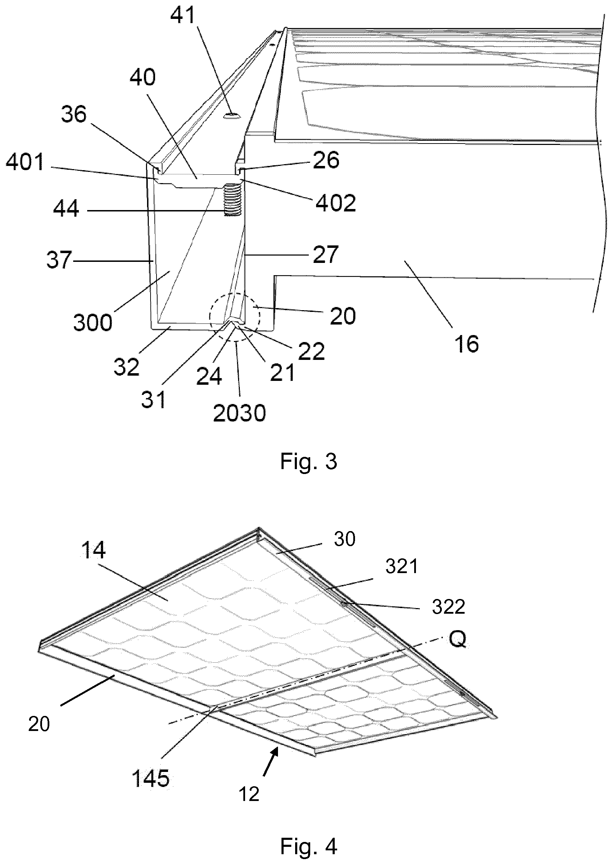

Die Platte 42 ist in einer anderen Variante auch entbehrlich. Wie in Fig. 3 gezeigt, können in Gewindebohrungen am U-förmigen Verbindungselement 40 eingedrehte Schrauben 44 sich mit ihrem vorderen Ende auch unmittelbar auf dem Steg 32 abstützen und dadurch das U-förmige Verbindungselement 40 mit seinen Stegen 401, 402 nach oben in die Längsnuten 261 bzw. 361 drücken und dadurch auch eine feste kraft- und formschlüssige Verbindung der Trägerprofile 20, 30 zu einem stabilen geschlossenen Hohlprofil bewirken.

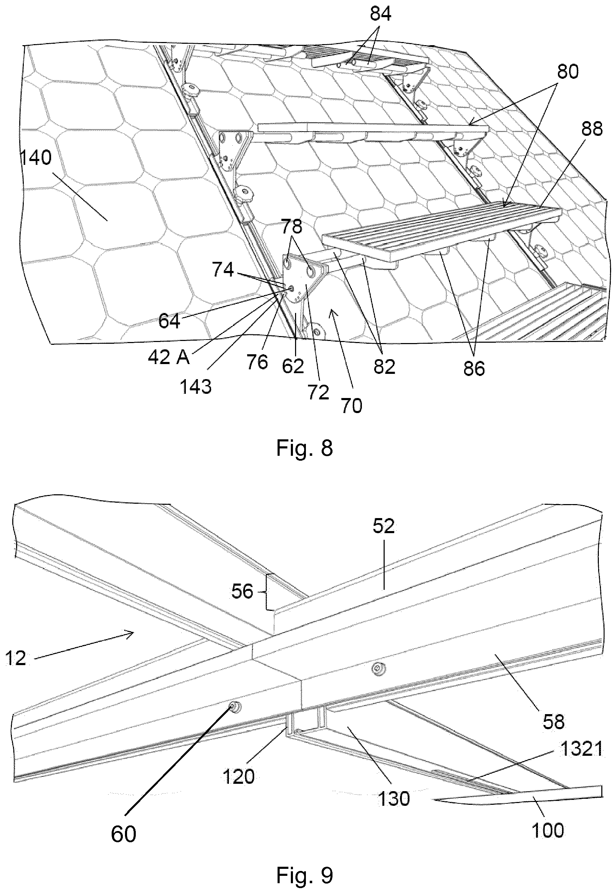

Die Platte 42 bildet den oberen Abschluss des Tragrahmens 12, der aus mehreren verbundenen Trägerprofilen 20, 30 gebildet wird. An dieser Platte 42 ist optional eine Schiene 42 A zur Befestigung von Zubehör vorgesehen. Das Zubehör wird mittels Schrauben 44, welche durch eine Durchgangsöffnung 43 der Platte 42 geführt werden, am Tragrahmen 12 befestigt. Im dargestellten Ausführungsbeispiel wird das Zubehör durch Stufen 80 gebildet. Die Details der Befestigung sind in Verbindung mit der Fig. 8 näher beschrieben.

Eine in der Fig. 3 dargestellte perspektivische Ansicht zeigt ein Trägerprofil 20, welches mit einem Trägerprofil-Endstück 300 verbunden ist. Die Formschlussverbindung 2030 wird in diesem Ausführungsbeispiel ebenfalls durch einen nach unten geöffnetes klammerförmiges Formschlusselement 31 und ein nach oben geöffnetes klammerförmiges Formschlusselement 21 gebildet. Für das leichtere Zusammenfügen der beiden Formschlusselemente 21, 31 weist das Formschlusselement 21 an seiner Unterseite eine Anschrägung 24 zum Ankippen des Trägerprofils 20 auf. An der der Formschlussverbindung 2030 gegenüberliegenden oberen Seite des Trägerprofils 20 und des Trägerprofil-Endstücks 300 sind an der vertikalen Wand 27 und der vertikalen Wand 37 als Hinterschnitte geformte, eine Längsnut begrenzende Stege 26, 36 ausgebildet, in die die U-förmigen Stege 401, 402 des Verbindungselement 40 eingreifen. Durch Anziehen der Schraube 44 wird diese in das Gewinde 41 eingeschraubt und somit die U-förmigen Stege 401, 402 in die durch die Stege 26; 36 mit der vertikalen Wand 27 37 gebildeten Längsnuten gedrückt, wodurch die Bauteile formschlüssig miteinander verbunden werden.

In der Fig. 4 ist ein plattenförmiger Gegenstand 14 dargestellt. Dieser ist an beiden Längsseiten mit jeweils einem Trägerprofil 20 bzw. 30 versehen. Der von den Trägerprofilen 20 bzw. 30 gebildete Tragrahmen 12 wird in einer Querachse Q durch eine Querstrebe 145 verstärkt. Dadurch wird die Stabilität des Tragrahmens 12 zusätzlich erhöht. Auf einer Längsseite des Tragrahmens 12 ist ein Trägerprofil 30 mit einem Langloch 321 und einer Schraube 322 dargestellt. Die Schraube 322 kann im Langloch 321 in Längsrichtung des Trägerprofils 30 so bewegt werden, dass der Tragrahmen 12 in unterschiedlichen Positionen und auf Unterkonstruktionen unterschiedlicher Geometrien befestigt werden kann.

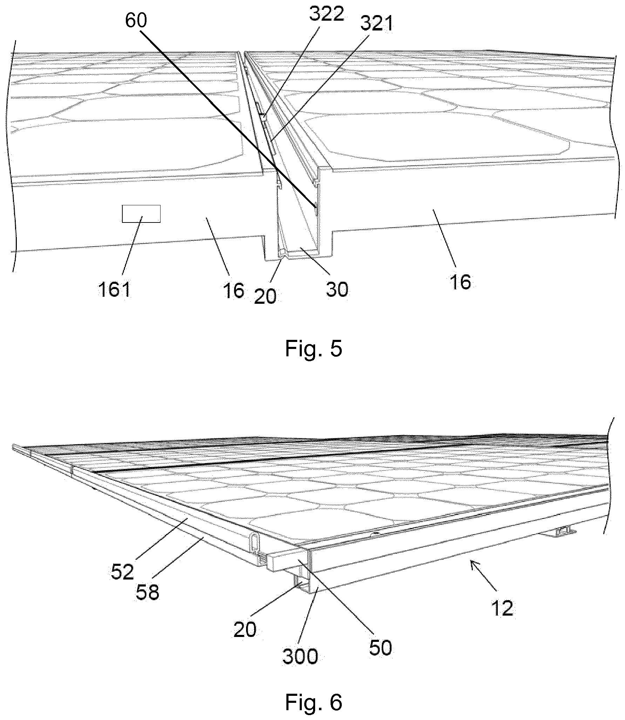

Fig. 5 zeigt die Trägerprofile 20 30 mit jeweils einer die Queröffnung der Trägerprofile 20, 30 mit abdeckenden Abdeckung 16 und einer Halterung 161 an den Abdeckungen 16. Durch die Abdeckungen 16 werden die Frontseiten der Trägerprofile 20, 30 verschlossen, so dass das gesamte System 10 nach außen ein geschlossenes Erscheinungsbild liefert und im Inneren vor Verschmutzung oder einen unbefugten Eingriff auf in den Hohlprofilen angeordnete Kabel oder elektronische Stecker oder Bauteile geschützt wird.

Eine in der Fig. 6 dargestellte perspektivische Ansicht zeigt mehrere plattenförmige Gegenstände 14 im Tragrahmen 12. Die durch das Verbindungselement 40 und die Trägerprofile 20; 30 gebildete Öffnung wird dabei durch ein quaderförmiges, Abschlussteil 50 verschlossen. Das Abschlussteil 50 kann beispielsweise aus einem Kunststoff mit geringer Elastizität gebildet sein, so kann es bei Bedarf wieder entfernt werden. Eine Dichtung 52 dichtet gegen Regen ab, welcher durch Wind in das System hineingedrückt werden kann. Die Dichtung 52 ist jedoch so konzipiert, dass die plattenförmigen Gegenstände 14 hinterlüftet und dadurch kühlbar sind. Die Kühlung durch Konvektion ist für einen erhöhten Wirkungsgrad von Photovoltaikmodulen wichtig.

In Fig. 7A sind zwei Trägerprofile 20, 30 dargestellt. An den Trägerprofilen 20, 30 ist eine vertikale Wand 27 bzw. 37 ausgebildet. Die Formschlussverbindung 2030 wird durch die Formschlusselemente 21, 31 gebildet. Am Formschlusselement 21 ist eine Anschrägung 24 zum Ankippen des Trägerprofils 20 vorgesehen.

Zur Befestigung des plattenförmigen Gegenstands 14 sind die vertikalen Wände 27 und 37 nach oben verlängert und bilden einen Anschlag 29 bzw. 39. Der plattenförmige Gegenstand 14 wird beim Einlegen in das Trägerprofil 20, 30 auf einen Steg 23, 33 aufgelegt und bis an den Anschlag 29, 39 geschoben. Der Anschlag 29; 39 geht in einem rechten Winkel in einem Abstand, der in etwa der Dicke des plattenförmigen Gegenstands 14 entspricht, in einen horizontalen Steg 25; 35 über. Auf der dem plattenförmigen Gegenstand 14 zugewandten Seite des horizontalen Stegs 25, 35 sind bevorzugt kleine Vertiefungen ausgebildet. Diese werden zur zuverlässigen Befestigung des plattenähnlichen Gegenstands 14 mit einem Klebstoff 46 gefüllt, der sich entlang der Innenseiten der Anschläge 29, 39 sowie der Auflagen 23, 33 verteilen kann.

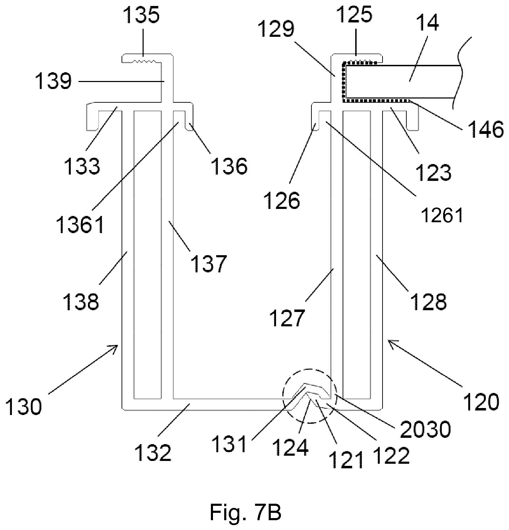

In der Fig. 7B ist eine Schwerlastvariante der beiden Trägerprofile 120; 130 dargestellt. Die Trägerprofile 120, 130 werden dort durch jeweils zwei parallele vertikale Wände 127, 128 bzw. 137, 138 gebildet. Die Formschlussverbindung 2030 wird auch in diesem Ausführungsbeispiel analog durch die Formschlusselemente 121, 131 gebildet. Am Formschlusselement 121 ist eine Anschrägung 124 zum Ankippen des Trägerprofils120 vorgesehen.

An der der Formschlussverbindung 2030 gegenüberliegenden oberen Seite der Trägerprofile 120, 130 sind weitere Formschlusselemente mit Stegen 126; 136 ausgebildet. Diese Stege 126, 136 bilden mit den vertikalen Wänden 127, 137 Hinterschnitte bzw. Längsnuten 1361, 1362, in die die U-förmigen Stege 401, 402 des Verbindungselements 40 eingreifen. Zur stabilen Befestigung des plattenförmigen Gegenstands 14 sind die vertikalen Wände 127, 137 in der Schwerlastvariante verlängert und bilden an jedem Trägerprofil 120, 130 einen Anschlag 129 bzw. 139. Der plattenförmige Gegenstand 14 wird beim Einlegen in das Trägerprofil 120, 130 auf einen Steg 123, 133 aufgelegt und bis an den Anschlag 129; 139 geschoben. Der Anschlag 129, 139 geht in einem rechten Winkel in einem Abstand, der in etwa der Dicke des plattenförmigen Gegenstands 14 entspricht, in einen horizontalen Steg 125, 135 über. Auf der dem plattenförmigen Gegenstand 14 zugewandten Seite des horizontalen Stegs 125, 135 sind kleine Vertiefungen ausgebildet. Diese werden zur zuverlässigen Befestigung des plattenähnlichen Gegenstands 14 mit einem Klebstoff 146 gefüllt, der sich entlang der Innenseiten der Anschläge 129, 139 sowie der Auflagen 123, 133 verteilen kann. Bei der Verwendung der Schwerlastvariante ist durch die erhöhte Tragfähigkeit des gesamten Systems 10 wenigstens ein Teil einer Dachkonstruktion ersetzbar.

Die Fig. 8 zeigt eine perspektivische Ansicht mit an den Schienen 42A befestigtem Zubehör. Am Tragrahmen 12 mit den plattenförmigen Gegenständen 14, die als Photovoltaikmodule 140 ausgebildet sind, sind an den Schienen 42A der Verbindungselementen 40 eine Mehrzahl von Konsolen 62 angeordnet. An den Konsolen 62 sind Zusatzelemente 70 angeordnet, die eine Stufe 80 mit der Konsole 62 verbinden. Um die Stufen 80 zum sicheren Betreten im richtigen Winkel einstellen zu können, ist an der Konsole 62 ein Drehgelenk 64 ausgebildet. Zur Fixierung der gewünschten Winkelstellung der Konsole 62 sind in einer Kulisse 72 und der Konsole 62 mehrere Bohrungen 74 ausgebildet. Durch die Bohrungen 74 werden Stifte 76 gesteckt, wodurch die Konsole 62 mit der Kulisse 72 lösbar verbindbar ist. An der dem Drehgelenk 64 entgegen gesetzten Seite der Kulisse 72 sind zwei Fixierungen 78 ausgebildet. An jeweils einer der Fixierungen 78 ist ein Tragrohr 82 angeordnet.

Die Tragrohre 82 sind hohl-zylinderförmig ausgebildet, so dass jeweils ein Tragrohr 82 optional einen ebenfalls zylinderförmigen Tragbolzen 84 aufnehmen kann. Dadurch, dass die Tragrohre 82 und Tragbolzen 84 optional verschiebbar miteinander verbunden sind, können Trittplatten 88 für unterschiedliche Breiten am Tragrahmen 12 eingesetzt werden. An der Unterseite der Trittplatten 88 sind Tragrippen 86 zur Stabilisierung ausgebildet. Die Tragrippen 88 können in Verbindung mit den Tragrohren 82 ebenfalls zur Einstellung der Abstützweite zwischen den Tragrahmen 12 benachbarter Photovoltaikmodule 140 dienen. Der Abstand der Stufen 80 zueinander lässt sich durch entsprechende Positionierung der Konsolen 62 in einem Langloch 143 der Schiene 42A des Verbindungsteils 40 einstellen.

In Fig. 9 ist eine Draufsicht auf eine Schwerlastvariante mit einem Rahmenquerteil 58 dargestellt. In dieser Darstellung sind auch die verbundenen Trägerprofile 120, 130 dargestellt, die mit einem Rahmenquerteil 58 verbunden sind. Zudem ist ein Abstand 56 zwischen der Oberkante der Dichtung 52 und der Oberkante des Tragrahmens 12 dargestellt.

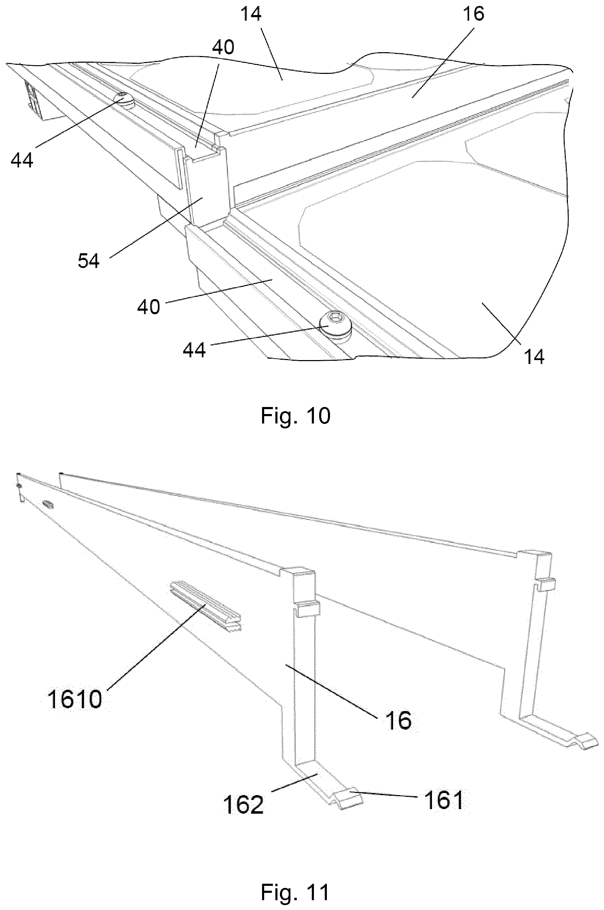

Die Fig. 10 zeigt eine Variante eines Abdeckprofils 54, die in diesem Ausführungsbeispiel nicht quaderförmig ausgestaltet ist, sondern in der Schwerlastvariante der Form der Öffnung zwischen Verbindungelement 40 und den Trägerprofilen 120, 130 angepasst ist.

In einer Detailansicht des Deckels 16, der den Abschluss des Systems 10 nach vorne darstellt, ist in Fig. 11 eine Halterung 161 dargestellt, die in eine gezahnt Nut einclipsbar ist. Mit dieser Halterung 161 kann der Deckel 16, wie in Fig. 5 angedeutet an einer Rastung des Tragrahmens 12 eingeclipst werden.

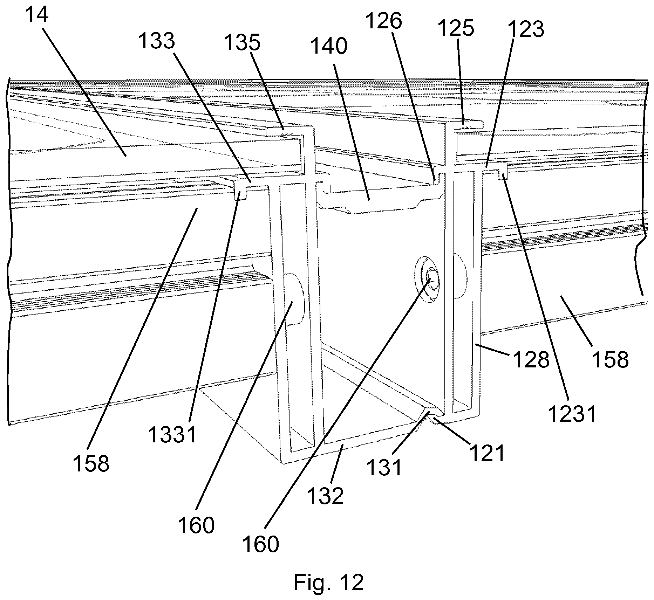

Wie in Figur 12 dargestellt, dienen die an den Enden der horizontalen Stege 123 und 133 vertikal nach unten abgebogenen Enden 1231, 1331 zur formschlüssigen Begrenzung der Rahmenquerteile 158, die mittels Schrauben 160 mit den Trägerprofilen 20, 30, 120 bzw. 130 zu einem geschlossenen Rahmen verbindbar sind.

Die Verbindung mittels Schrauben 60 und die formschlüssige Begrenzung der Rahmenquerteile 58 findet ebenso bei den nicht doppelwandigen Trägerprofilen 20, 30 gemäß Figur 1, 3, 5 oder 7A statt.

### Bezugszeichenliste

- 10: System
- 12: Tragrahmen
- 14: plattenförmiger Gegenstand
- 140: Photovoltaik-Modul
- 145: Querstrebe
- 146: Klebstoff
- 16: Deckel (Abschluss nach vorne)
- 1610: Halterung
- 161: Formschlusselement
- 162: Steg
- 20: Trägerprofil
- 21: Formschlusselement (an 22)
- 22: (horizontaler) Steg
- 23: Steg (horizontal; Auflage für 14)
- 231: Steg (vertikal an 23, Begrenzung für 58)
- 24: Anschrägung
- 25: (horizontaler) Steg
- 26: (vertikaler) Steg
- 261: Längsnut
- 27: (vertikale) Wand
- 29: Anschlag
- 30: Trägerprofil
- 300: Trägerprofil-Endstück
- 31: Formschlusselement
- 32: Steg
- 321: Langloch
- 322: Schraube
- 33: Steg (horizontal; Auflage für 14)
- 331: Steg (vertikal an 33, Begrenzung für 58)
- 35: (horizontaler) Steg
- 36: (vertikaler)Steg
- 361: Längsnut
- 37: (vertikale) Wand
- 39: Anschlag
- 2030: Formschlussverbindung
- 40: Verbindungselement
- 401: Steg (von 40)
- 402: Steg (von 40)
- 41: Gewinde
- 42: Platte
- 42A: Schiene (für Zubehör)
- 43: Durchgangsöffnung
- 44: Schraube
- 46: Klebstoff
- 50: Abschlussteil (an 20; 30)
- 52: Dichtung
- 54: Abdeckprofil
- 56: Abstand
- 58: Rahmenquerteil
- 60: Schraube
- 62: Konsole
- 64: Drehgelenk
- 70: Zusatzelemente
- 72: Kulisse
- 74: Bohrungen
- 76: Stift
- 78: Fixierung
- 80: Stufen
- 82: Tragrohr
- 84: Tragbolzen
- 86: Tragrippen
- 88: Trittplatte
- 100: Träger
- 120: Trägerprofil
- 121: Formschlusselement (an 122)
- 122: Steg
- 123: Steg (horizontal; Auflage für 14)
- 1231: Steg (vertikal an 123, Begrenzung für 158)
- 124: Anschrägung
- 125: (horizontaler) Steg
- 126: (vertikaler) Steg
- 1261: Längsnut
- 127: (vertikale) Wand
- 128: (vertikale) Wand
- 129: Anschlag
- 130: Trägerprofil
- 131: Formschlusselement (an 132)
- 132: Steg
- 1321: Längsnut
- 133: Steg (horizontal; Auflage für 14)
- 1331: Steg (vertikal an 133, Begrenzung für 158)
- 135: (horizontaler) Steg
- 136: (vertikaler) Steg
- 1361: Längsnut
- 137: (vertikale) Wand
- 138: (vertikale) Wand
- 139: Anschlag
- 140: Verbindungselement
- 158: Rahmenquerteil
- 160: Schraube
- Q: Querachse

## Patentansprüche

1. System (10) zur Bildung eines Tragrahmens (12) für mehrere plattenförmige, in einer Fläche angeordnete Gegenstände (14), mit mehreren Trägerprofilen (20, 30; 120, 130), wobei jedes Trägerprofil (20,30;120,130) wenigstens ein Formschluss-Element (21, 31; 121, 131) zur Bildung einer Formschlussverbindung (2030) zum Verbinden mit benachbarten Trägerprofilen (20, 30; 120, 130) aufweist, wobei zwei benachbarte Trägerprofile (20, 30; 120, 130) gemeinsam mit wenigstens einem diese formschlüssig verbindenden Verbindungselement (40; 42) ein geschlossenes Hohlprofil bilden, wobei das Formschluss-Element (21, 31; 121, 131) an einem im wesentlich horizontalen Steg (22, 32; 122; 132) des Trägerprofils (20, 30; 120, 130) angeordnet ist, wobei das Formschluss-Element (21, 31; 121, 131) von einem nach unten geöffneten ersten klammerförmigen Steg (31; 131) an einem Trägerprofil (30; 130) und von einem nach oben geöffneten zweiten klammerförmigen Steg (21; 121) an einem benachbarten Trägerprofil (20; 120) gebildet wird, **dadurch gekennzeichnet dass** benachbart zu dem nach oben geöffneten zweiten klammerförmigen Steg (21; 121) am Trägerprofil (20; 120) eine Anschrägung (24; 124) vorgesehen ist, die ein Ankippen dieses Trägerprofils (20; 120) für ein Verbinden mit dem benachbarten Trägerprofil (30; 130) auf derselben Ebene ermöglicht.

2. System (10) nach Anspruch 1, **dadurch gekennzeichnet, dass** ein erstes Verbindungselement (40) formschlüssig in zwei Hinterschnitte (26; 36) an den benachbarten Trägerprofilen (20, 30; 120, 130) eingreift.

3. System (10) nach Anspruch 2, **dadurch gekennzeichnet, dass** das erste Verbindungselement (40) mittels einer kraftschlüssigen Verbindung mit einem als Platte (42) ausgebildeten zweiten Verbindungselement verbindbar ist.

4. System (10) nach einem der vorhergehenden Ansprüche, **dadurch gekennzeichnet, dass** am Trägerprofil (20, 30; 120, 130) Auflage-Elemente (23, 123; 33; 133) und Anschlag-Elemente (29, 129; 39, 139) für das Positionieren der plattenförmigen Gegenstände (14) ausgebildet sind.

5. System (10) nach Anspruch 4, **dadurch gekennzeichnet, dass** das Auflage-Element (23; 33) am Trägerprofil (20, 30; 120, 130) einen Abstand zum oberen Rand des Trägerprofils (20, 30; 120, 130) aufweist, der der Dicke des plattenförmigen Gegenstands (14) entspricht.

6. System (10) nach einem der vorhergehenden Ansprüche, **dadurch gekennzeichnet, dass** die die Trägerprofile (20, 30; 120, 130) nach unten abgebogene Stege (26, 126; 36, 136) aufweisen, die mit einer vertikalen Wand (27, 37; 127, 137) des Trägerprofils (20; 30) einen Abstand bilden, in welchem ein vertikaler Steg (401, 402) eines U-förmig ausgebildeten Verbindungselements (40) aufnehmbar ist.

7. System (10) nach einem der vorhergehenden Ansprüche, **dadurch gekennzeichnet, dass** die Trägerprofile (20, 30; 120, 130) weitere nach unten abgebogene Stege (231, 331; 1231, 1331) aufweisen, die als formschlüssige Begrenzung für mit den Trägerprofilen (20, 30; 120, 130) verbindbare Rahmenquerteile (58; 158) dienen.

8. System (10) nach einem der vorhergehenden Ansprüche, **dadurch gekennzeichnet, dass** die Verbindungselemente (40) als Träger für weiteres Zubehör dienen.

9. System (10) nach Anspruch 8, **dadurch gekennzeichnet, dass** als Zubehör begehbare Stufen (80) und/oder Reinigungssysteme vorgesehen sind.

10. System (10) nach einem der vorhergehenden Ansprüche, **dadurch gekennzeichnet, dass** die plattenförmigen Gegenstände (14) von Photovoltaik-Modulen (140) gebildet werden.

11. System (10) nach einem der vorhergehenden Ansprüche, **dadurch gekennzeichnet, dass** das Trägerprofil (20, 30; 120, 130) und/oder der Verbindungsbereich zwischen zwei Trägerprofilen (20, 30; 120, 130) stirnseitig mittels eines Abdeckprofils (54) abdeckbar ist.

12. System (10) nach Anspruch 4, **dadurch gekennzeichnet, dass** das Trägerprofil (20, 30; 120, 130) wenigstens eine vertikale Wand (27; 28; 127, 128) aufweist und die Formschluss-Elemente (21, 31; 121, 131) zum Verbinden mit einem benachbarten Trägerprofil (20, 30; 120, 130) auf einer Seite dieser Wand (27,28;127,128) und die Auflage-Elemente (23, 123; 33, 133) und Anschlag-Elemente (29, 129; 39, 139) für das Positionieren der plattenförmigen Gegenstände (14) auf der anderen Seite der vertikalen Wand (27,28;127,128) angeordnet sind.

## Claims

1. System (10) for forming a support frame (12) for a plurality of board-shaped objects (14) arranged in a surface, having a plurality of support profiles (20, 30; 120, 130), each support profile (20, 30; 120, 130) having at least one interlocking element (21, 31; 121, 131) for forming an interlocking connection (2030) for connecting to adjacent support profiles (20, 30; 120, 130), two adjacent support profiles (20, 30; 120, 130) forming a closed hollow profile together with at least one connecting element (40; 42) that interlockingly connects said support profiles, the interlocking element (21, 31; 121, 131) being arranged on a substantially horizontal projection (22, 32; 122; 132) of the support profile (20, 30; 120, 130), the interlocking element (21, 31; 121, 131) being formed from a first clamp-shaped projection (31; 131) that is open at the bottom and is on a support profile (30; 130), and from a second clip-shaped projection (21; 121) that is open at the top, and on an adjacent support profile (20; 120), **characterized in that** a chamfer (24; 124) is provided which is adjacent to the second clamp-shaped projection (21; 121) that is open at the top on the support profile (20; 120), which tilts said support profile (20; 120) in order to facilitate a connection to the adjacent support profile (30; 130) on the same plane.

2. System (10) according to claim 1, **characterized in that** a first connecting element (40) interlockingly engages in two undercuts (26; 36) on the adjacent support profiles (20, 30; 120, 130).

3. System (10) according to claim 2, **characterized in that** the first connecting element (40) can be connected, by means of a force-locking connection, to a second connecting element designed as a board (42).

4. System (10) according to any of the preceding claims, **characterized in that** rest elements (23, 123; 33; 133) and stop elements (29, 129; 39, 139) are formed on the support profile (20, 30; 120, 130) for positioning the board-shaped objects (14).

5. System (10) according to claim 4, **characterized in that** the rest element (23; 33) on the support profile (20, 30; 120, 130) has a gap from the upper edge of the support profile (20, 30; 120, 130) which corresponds to the thickness of the board-shaped object (14).

6. System (10) according to any of the preceding claims, **characterized in that** the support profiles (20, 30; 120, 130) have projections (26, 126; 36, 136) which bend downwards and, together with a vertical wall (27, 37; 127, 137) of the support profile (20; 30), form a gap in which a vertical projection (401, 402) of a U-shaped connecting element (40) can be accommodated.

7. System (10) according to any of the preceding claims, **characterized in that** the support profiles (20, 30; 120, 130) have further projections (231, 331; 1231, 1331) which are bent downwards and are used for interlockingly delimiting frame cross members (58; 158) that can be connected to the support profiles (20, 30; 120, 130).

8. System (10) according to any of the preceding claims, **characterized in that** the connecting elements (40) are used as supports for further attachments.

9. System (10) according to claim 8, **characterized in that** accessible steps (80) and/or cleaning systems are provided as attachments.

10. System (10) according to any of the preceding claims, **characterized in that** the board-shaped objects (14) are formed of photovoltaic modules (140).

11. System (10) according to any of the preceding claims, **characterized in that** the support profile (20, 30; 120, 130) and/or the connecting region between two support profiles (20, 30; 120, 130) can be covered on the end face by means of a cover profile (54).

12. System (10) according to claim 4, **characterized in that** the support profile (20, 30; 120, 130) has at least one vertical wall (27; 28; 127, 128) and the interlocking elements (21, 31; 121, 131) are arranged on one side of said wall (27, 28; 127, 128) in order to connect to an adjacent support profile (20, 30; 120, 130) and the rest elements (23, 123; 33, 133) and stop elements (29, 129; 39, 139) are arranged on the other side of the vertical wall (27, 28; 127, 128) in order to position the board-shaped objects (14).

## Revendications

1. Système (10) de formation d'un cadre support (12) pour plusieurs objets (14) en forme de plaque, disposés sur une surface, le système comprenant plusieurs profilés de support (20, 30 ; 120, 130), dans lequel chaque profilé de support (20, 30 ; 120, 130) comporte au moins un élément de liaison de forme (21, 31 ; 121, 131) permettant de former une liaison de forme (2030) pour la liaison à des profilés de support (20, 30 ; 120, 130) adjacents, dans lequel deux profilés de support (20, 30 ; 120, 130) adjacents forment, conjointement avec au moins un élément de liaison (40 ; 42) reliant ceux-ci par liaison de forme, un profilé creux fermé, dans lequel l'élément de liaison de forme (21, 31 ; 121, 131) est disposé au niveau d'une traverse (22, 32 ; 122 ; 132) sensiblement horizontale du profilé de support (20, 30 ; 120, 130), dans lequel l'élément de liaison de forme (21, 31 ; 121, 131) est formé par une première traverse en forme d'agrafe (31 ; 131) s'ouvrant vers le bas au niveau d'un profilé de support (30 ; 130) et par une seconde traverse en forme d'agrafe (21 ; 121) s'ouvrant vers le haut au niveau d'un profilé de support (20 ; 120), **caractérisé en ce qu'**un biseau (24 ; 124) est prévu au niveau du profilé de support (20 ; 120) adjacent à la seconde traverse en forme d'agrafe (21 ; 121) s'ouvrant vers le haut, lequel biseau permet de faire basculer ce profilé de support (20 ; 120) afin de le relier au profilé de support (30 ; 130) adjacent dans le même plan.

2. Système (10) selon la revendication 1, **caractérisé en ce qu'**un premier élément de liaison (40) vient en prise par liaison de forme dans deux contre-dépouilles (26 ; 36) au niveau des profilés de support (20, 30 ; 120, 130) adjacents.

3. Système (10) selon la revendication 2, **caractérisé en ce que** le premier élément de liaison (40) peut être relié au moyen d'une liaison par adhérence à un second élément de liaison réalisé sous la forme d'une plaque (42).

4. Système (10) selon l'une des revendications précédentes, **caractérisé en ce que,** au niveau du profilé de support (20, 30 ; 120, 130), des éléments d'appui (23, 123 ; 33 ; 133) et des éléments de butée (29, 129 ; 39, 139) sont réalisés pour le positionnement des objets en forme de plaque (14).

5. Système (10) selon la revendication 4, **caractérisé en ce que** l'élément d'appui (23 ; 33) au niveau du profilé de support (20, 30 ; 120, 130) présente une distance par rapport au bord supérieur du profilé de support (20, 30 ; 120, 130), laquelle distance correspond à l'épaisseur de l'objet en forme de plaque (14).

6. Système (10) selon l'une des revendications précédentes, **caractérisé en ce que** les profilés de support (20, 30 ; 120, 130) comportent des traverses (26, 126 ; 36, 136) pliées vers le bas, lesquelles traverses forment avec une paroi verticale (27, 37 ; 127, 137) du profilé de support (20 ; 30) une distance sur laquelle une traverse verticale (401, 402) d'un élément de liaison en U (40) peut être reçue.

7. Système (10) selon l'une des revendications précédentes, **caractérisé en ce que** les profilés de support (20, 30 ; 120, 130) comportent des traverses (231, 331 ; 1231, 1331) supplémentaires pliées vers le bas, lesquelles traverses servent de délimitation par liaison de forme pour les parties transversales de cadre (58 ; 158) pouvant être reliées aux profilés de support (20, 30 ; 120, 130).

8. Système (10) selon l'une des revendications précédentes, **caractérisé en ce que** les éléments de liaison (40) servent de supports pour d'autres accessoires.

9. Système (10) selon la revendication 8, **caractérisé en ce que** des marches praticables (80) et/ou des systèmes de nettoyage sont prévus comme accessoires.

10. Système (10) selon l'une des revendications précédentes, **caractérisé en ce que** les objets en forme de plaque (14) sont constitués de modules photovoltaïques (140).

11. Système (10) selon l'une des revendications précédentes, **caractérisé en ce que** le profilé de support (20, 30 ; 120, 130) et/ou la zone de liaison entre deux profilés de support (20, 30 ; 120, 130) peut être couvert sur le côté frontal au moyen d'un profilé de recouvrement (54).

12. Système (10) selon la revendication 4, **caractérisé en ce que** le profilé de support (20, 30 ; 120, 130) comporte au moins une paroi verticale (27 ; 28 ; 127, 128), **en ce que** les éléments de liaison de forme (21, 31 ; 121, 131) sont disposés sur un côté de ladite paroi (27, 28 ; 127, 128) pour la liaison à un profilé de support (20, 30 ; 120, 130) adjacent, et **en ce que** les éléments d'appui (23, 123 ; 33, 133) et les éléments de butée (29, 129 ; 39, 139) sont disposés sur l'autre côté de la paroi verticale (27, 28 ; 127, 128) pour le positionnement des objets en forme de plaque (14).
